# EUROPEAN PATENT APPLICATION

(11) **EP 2 597 442 A1**
(43) Date of publication of application: **29.05.2013**
(21) Application number: 11191028.7
(22) Date of filing: 28.11.2011
(51) Int. Cl.: G01L 9/00, G01L 9/06

(54) **PRESSURE SENSORS AND METHODS OF SENSING PRESSURE**

(71) Applicant: Honeywell Romania SRL, 014459 Bucharest (RO)
(72) Inventor: Brezeanu, Mihai, 014459 Bucharest (RO); Dumitru, Viorel Georgel, 014459 Bucharest (RO); Georgescu, Ion, 014459 Bucharest (RO); Costea, Stefan Dan, 014459 Bucharest (RO); Buiu, Octavian, 014459 Bucharest (RO)
(74) Representative: Buckley, Guy Julian

(57) **Abstract**

Sensors and methods of sensing pressure are described herein. One device includes a substrate, a membrane on at least a portion of the substrate, a number of transistors in the membrane, and a circuit including the number of transistors. The membrane can be configured to change shape in response to a pressure applied to the membrane. A portion of the number of transistors can be configured to detect the changed shape of the membrane, and the circuit can be configured to convert the detected changed shape into a magnitude of the pressure

## Description

### Technical Field

The present disclosure relates to pressure sensors and methods of sensing pressure.

### Background

Pressure sensors can be used for measuring pressure and/or converting the measured pressure into a signal which can be read by an observer and/or an instrument. Pressure sensors may have to operate in high temperatures and/or other harsh environments, such as, for example, industrial equipment, internal combustion engines, oil/gas/geothermal explorations and/or drilling, gas turbines, etc.

Pressure sensors are typically called upon to exhibit a relatively high sensitivity while maintaining a low cost of manufacture. The sensitivity and/or cost of manufacture of a pressure sensor may depend upon the type of material and/or upon the method of fabrication used to manufacture the sensor, for example.

Current commercially available silicon piezoresistive pressure sensors are unable to work at high temperatures (e.g., temperatures approaching 300 degrees Celsius). As a result, attempts have been made to find pressure sensors utilizing alternative materials to silicon. However, such non-silicon pressure sensors have little field testing and can be unreliable. Further, non-silicon pressure sensors can be more expensive to manufacture than silicon based pressure sensors.

Other previous pressure sensors may be able to operate in high temperatures and/or other harsh environments. However, such previous pressure sensors had low sensitivity and/or a prohibitively high cost of manufacture due, in part, to the method of fabrication used to manufacture the sensors. That is, such previous sensors did not provide an adequate degree of measurement sensitivity and/or were prohibitively expensive to manufacture.

### Brief Description of the Drawings

Figure 1 illustrates a pressure sensor in accordance with one or more embodiments of the present disclosure.
Figure 2 illustrates a schematic of a circuit in accordance with one or more embodiments of the present disclosure.
Figure 3 illustrates a pressure sensor with a cavity in accordance with one or more embodiments of the present disclosure.
Figure 4 illustrates a method for sensing pressure in accordance with one or more embodiments of the present disclosure.

### Detailed Description

Pressure sensors and methods of sensing pressure are described herein. For example, one or more embodiments include a substrate; a membrane on at least a portion of the substrate, a number of transistors in the membrane, and a circuit including the number of transistors. The membrane can be configured to change shape in response to a pressure applied to the membrane. A portion of the number of transistors can be configured to detect the changed shape of the membrane and the circuit can be configured to convert the detected changed shape into a magnitude of the pressure.

Pressure sensors in accordance with one or more embodiments of the present disclosure can utilize, for example, commercially available and field tested silicon-on-insulator (SOI) construction. Such pressure sensors can withstand environmental temperatures up to 350 degrees Celsius. In some embodiments, pressure sensors according to the present disclosure can be complementary metal-oxide-semiconductor (CMOS) compatible. Benefits of such CMOS compatible pressure sensors can include, for example, utilizing a mature technology in the field of sensors, thereby increasing reliability, and relatively cheap manufacturing methods as compared to non-CMOS compatible pressure sensors.

As such, pressure sensors in accordance with one or more embodiments of the present disclosure can have increased measurement sensitivity in harsh high temperature environments (e.g., approaching 300 degrees Celsius) compared to previous pressure sensors. For example, pressure sensors in accordance with one or more embodiments of the present disclosure can utilize metal oxide semiconductor field effect transistors (MOSFETs) that can, for example, function at temperatures up to 350 degrees Celsius. Further, pressure sensors in accordance with the present disclosure can have increased sensitivity to pressure differences, as compared to previous pressure sensors, due to piezoresistive effects which occur in channels of p-type and n-type silicon MOSFETs.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

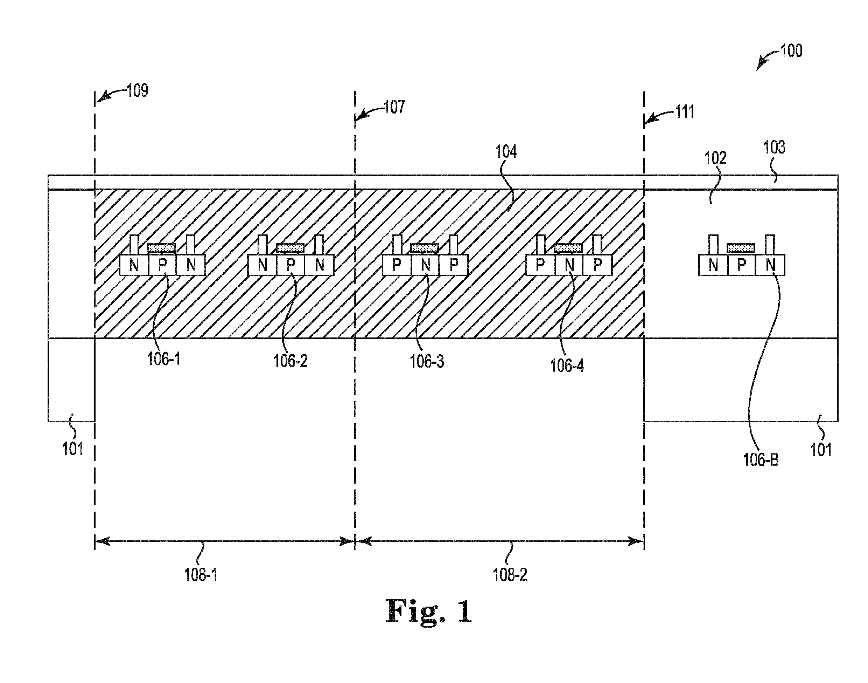

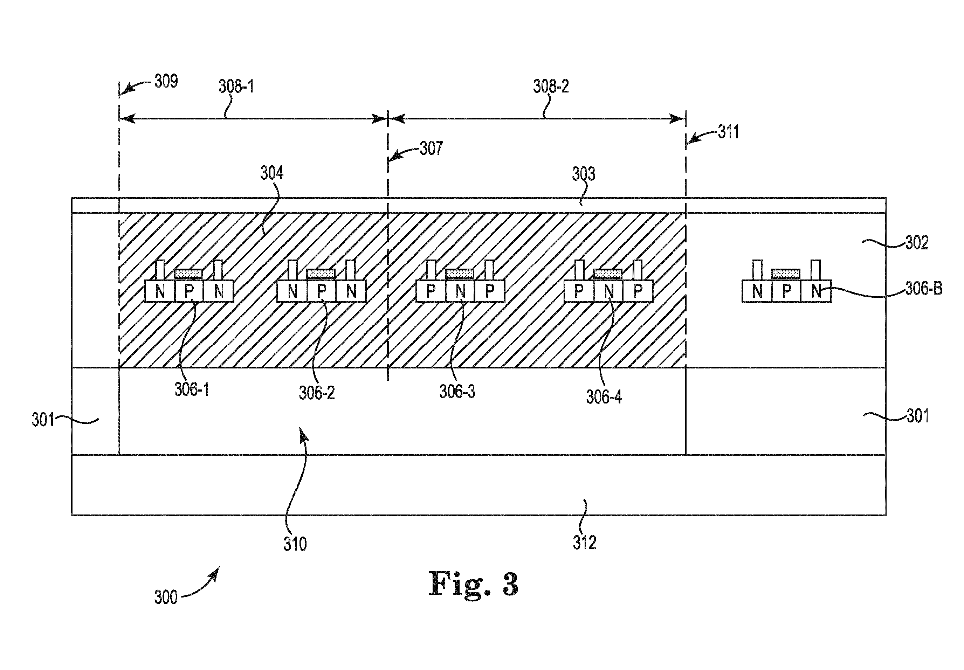

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 302 in Figure 3.

As will be appreciated, elements shown in the some embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

As used herein, "a" or "a number of" something can refer to one or more such things. For example, "a number of sensor devices" can refer to one or more sensor device. Additionally, the designator "B" as used herein, particularly with respect to reference numerals in the drawings, indicates that a number of the particular feature so designated can be included with a number of embodiments of the present disclosure.

Figure 1 illustrates a pressure sensor 100 in accordance with one or more embodiments of the present disclosure. As shown in Figure 1, pressure sensor 100 can include a substrate 102. Pressure sensor 100 can include a piezoresistive semiconductor layer 101 on which an isolator substrate layer 102 can be deposited. The piezoresistive semiconductor layer 101 can include, but is not limited to, materials such as Silicon. The isolator substrate layer 102 can include, but is not limited to, materials such as SiO₂.

In some embodiments, pressure sensor 100 can include a passivation layer 103. However, embodiments are not so limited as to include a passivation layer. Passivation layer 103 can, for example, be deposited on the isolator substrate 102. The passivation layer can include isolator materials, such as, but not limited to, Si₃N₄.

As shown in Figure 1, pressure sensor 100 can include a membrane 104 on at least a portion of the substrate 102. For example, the membrane 104 can be etched on at least a portion of the isolator substrate 102. For example, the etching can be such that pillars of the membrane 104 can include the piesoresistive semiconductor material of layer 101. In some embodiments the membrane can be a silicon-on-insulator membrane. The silicon-on-insulator membrane 104 can, for example, include SiO₂.

The membrane 104 can be a flexible membrane that may bend and/or change shape in response to an applied pressure via an impinging medium. The membrane 104 can, for example, move in a number of directions including, but not limited to, perpendicular to a major surface of the membrane 104, the isolator substrate 102, a number of layers of the pressure sensor 100, and/or combinations thereof. The stress/strain as a result of the impinging medium may also occur laterally due to deformation, for example.

As shown in Figure 1, pressure sensor 100 includes a number of transistors 106-1, 106-2, 106-3, 106-4, ..., 106-B. As shown in Figure 1, transistors 106-1, 106-2, 106-3, 106-4, ..., 106-B are within the substrate 102. More specifically, transistors 106-1, 106-2, 106-3, and 106-4 are illustrated within the membrane 104 and transistor 106-B is illustrated as on the substrate 102, but not over or in membrane 104. As used herein, the term within can include on, above, beneath, and/or combinations thereof. By not being situated over or in the membrane 104, although situated on the substrate, the transistor 106-B may, for example, not be influenced by an ambient pressure change. Transistor 106-B may be a reference of nonchange in substrate flexibility. Embodiments of the present disclosure can include transistors 106-1, 106-2, 106-3, 106-4, ..., 106-B including the same material as the piezoresistive layer 101.

Embodiments of the present disclosure can include at least five transistors 106-1, 106-2, 106-3, 106-4, ..., 106-B. However, embodiments of the present disclosure are not limited to a particular number of transistors. In some embodiments, the transistors 106-1, 106-2, 106-3, 106-4, ..., 106-B can include metal oxide semiconductor field effect transistors (MOSFETs).

In some embodiments, the number of transistors 106-1, 106-2, 106-3, 106-4, ..., 106-B can include at least two p-type transistors. As shown in Figure 1, transistors 106-3 and 106-4 are p-type transistors. That is, transistors 106-3 and 106-4 have an n-doped semiconductor layer between two p-doped semiconductor layers. A p-type semiconductor can be obtained by carrying out a process of doping: that is, adding a certain type of atoms to the semiconductor in order to increase the number of free charge carriers. An n-type semiconductor can include an extrinsic semiconductor in which the dopant atoms are capable of providing extra conduction electrons to the host to create an excess of negative electron charge carriers. As depicted in Figure 1, transistors 106-1 and 106-2 are n-type transistors. That is, transistors 160-1 and 106-2 have a p-doped semiconductor layer between two n-doped semiconductor layers.

Embodiments of the present disclosure can include each transistor 106-1, 106-2, 106-3, and 106-4 as p-type transistors. In such embodiments transistor 106-B can be either p-type or n-type. Further embodiments include each transistor 106-1, 106-2, 106-3, and 106-4 as n-type transistors. In such embodiments transistor 106-B can be either p-type or n-type.

According to some embodiments of the present disclosure, the membrane 104 is configured to change shape in response to a pressure applied to the membrane. At least one transistor (e.g., transistors 106-1, 106-2, 106-3, ..., 106-4) can, for example, be in the flexible membrane 104 to detect a flexing and/or a change in shape of the membrane in response to a pressure from a medium impinging the membrane, as discussed herein. The medium impinging the membrane can include, but is not limited to, ambient pressure.

Embodiments can include one of the number of transistors on a first half of the substrate 102 proximate to a center of the membrane 104, one of the number of transistors on a second half of the substrate 102 proximate to the center of the membrane104, one of the number of transistors on the first half of the substrate 102 proximate to a first edge of the membrane 104, and one of the number of transistors on the second half of the substrate 102 proximate to a second edge of the membrane 104.

In the embodiment illustrated in Figure 1, 108-1 is the first half of the substrate and 108-2 is the second half of the substrate. Transistor 106-2 is on the first half 108-1 of the substrate 102 proximate to a center 107 of the membrane 104. Transistor 106-3 is on the second half 108-2 of the substrate 102 proximate to the center 107 of the membrane 104. Transistor 106-1 is on the first half 108-1 of the substrate 102 proximate to a first edge 109 of the membrane 104. Transistor 106-4 is on the second half 108-2 of the substrate 102 proximate to a second edge 111 of the membrane 104.

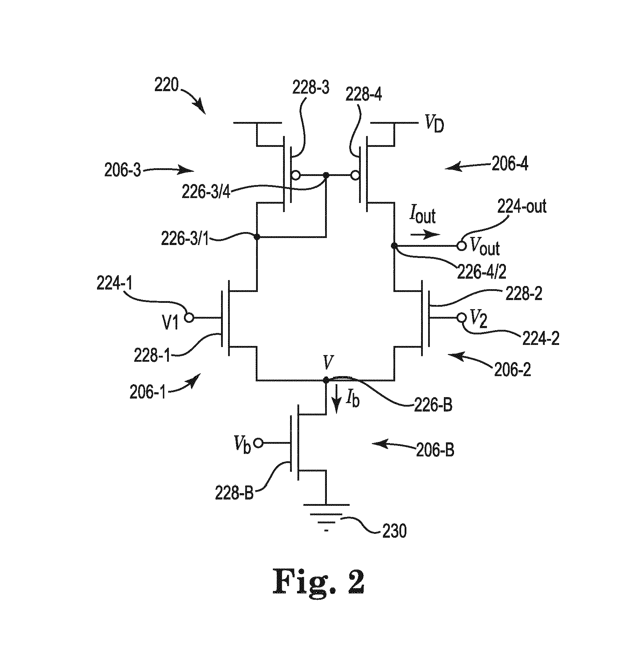

The pressure sensor 100 can include a circuit including the number of transistors 106-1, 106-2, 106-3, 106-4, ..., 106-B. The circuit can be configured to convert the detected flexing and/or changed shape of the membrane into a magnitude of the pressure applied to the membrane. The circuit can include an active load differential amplifier and non-Wheatstone bridge configuration. Some embodiments of the present disclosure can include a circuit as discussed further herein (e.g., in connection with Figure 2).

Figure 2 illustrates a schematic of a circuit 220 in accordance with one or more embodiments of the present disclosure. The circuit 220 may be at least partially located on and/or within a flexible membrane (e.g., membrane 104 previously discussed in connection with Figure 1). As shown in Figure 2, circuit 220 can include a number of transistors 206-1, 206-2, 206-3, 206-4, ..., 206-B, which can be analogous to transistors 106-1, 106-2, 106-3, 106-4, ..., 106-B previously discussed in connection with Figure 1. That is, transistors 206-1, 206-2, and 206-B are illustrated in Figure 2 as n-type transistors and transistors 206-3 and 206-4 are illustrated as p-type transistors. However, embodiments are not so limited. For example, each transistor 206-1, 206-2, 206-3, and 206-4 can be n-type or each transistor 206-1, 206-2, 206-3, and 206-4 can be p-type (e.g., as discussed in connection with Figure 1).

As shown in Figure 2, transistors 206-3 and 206-4 may have a connection to a source voltage (V_{D}). A gate 228-3 of transistor 206-3 and a gate 228-4 of transistor 206-4 may be connected together at connection 226-3/4. Connection 226-3/4 may be connected via connection 226-3/1 to a drain of transistor 206-3. The drain of transistor 206-3 may be connected to a drain of transistor 206-1. A drain of transistor 206-4 may be connected to a drain of transistor 206-2. The sources of transistors 206-1 and 206-2 may be connected to a connection 226-B. Connection 226-B may be connected to a drain of transistor 206-B. Transistor 206-B may have a source for connection to a ground 230 or reference voltage terminal.

A current (I_{B}) may flow from the sources of transistors 206-1 and 206-2 via the connection 226-B to and through transistor 206-B to ground/terminal 230. A voltage (V) may be indicated at connection 226-B. Terminal 224-OUT may be connected, via connection 226-4/2, to the drain of transistor 206-4 and the drain of transistor 206-2. A current output (Iₒᵤₜ) and a voltage output (Vₒᵤₜ) may be at terminal 224-OUT. The current output (lout) and voltage output (Vₒᵤₜ) may result from unbalances between transistors as discussed herein.

A gate 228-1 of transistor 206-1 may be connected to a first voltage (V₁) at terminal 224-1. A gate 228-2 of transistor 206-2 may be connected to a second voltage (V₂) at terminal 224-2. A gate 228-B of transistor 206-B may be connected to a voltage (V_{B}) at a terminal 206-B.

The pressure of the impinging medium may, via the piesoresistive effect in the piesoresistive semiconductor material, change the carrier mobility in a channel of transistors 206-1, 206-2, 206-3, and 206-4. Thus, the channel conductance of the four transistors 206-1, 206-2, 206-3, and 206-4 may change with the pressure. An amount of channel conductance change in one or more of the four transistors may be a measurement of the pressure. As described in reference to Figure 1, positioning transistors 206-2 and 206-3 near the center of the flexible membrane and transistors 206-1 and 206-4 near the edges of membrane, the sign or direction of the changes may be the opposite for the two pairs of transistors. For example, when the channel conductivity of transistor 206-2 and transistor 206-3 increases, then the channel conductivity of transistor 206-1 and transistor 206-4 may decrease, and vice versa.

In some embodiments, a first branch of the circuit 220 can include the transistor on the first half of the substrate proximate to the center of the membrane coupled to the transistor on the second half of the substrate proximate to the second edge of the membrane, and a second branch of the circuit 220 can include the transistor on the second half of the substrate proximate to the center of the membrane coupled to the transistor on the first half of the substrate proximate to the first edge of the membrane. Transistors 206-2 and 206-4 can be considered the first branch of the circuit 220, and transistors 206-1 and 206-3 can be considered the second branch of circuit 220. Further, as shown in Figure 2, the drain of transistor 206-4 is connected to the drain of transistor 206-2 and the drain of transistor 206-3 is connected to the drain of transistor 206-1. That is, the right side of the circuit 220 can be considered the first branch of the circuit and the left side of the circuit 220 can be considered the second branch of the circuit.

Unbalances between the first branch and the second branch of the circuit 220 can result from the medium impinging the membrane and be realized as an output current (lout) corresponding to the magnitude of the pressure from the medium impinging the membrane. Unbalances can include, but are not limited to, a difference in a current of the first branch and a current of the second branch and an antagonistic effect on the first and the second branches.

The current difference between the first and second branches may be increased by opposite effects of the pressure on the first branch and the second branch, as discussed herein.

For example, if no pressure from a medium impinging the membrane is detected, then no unbalance occurs between the first and the second branch of the circuit 220. In such an example, transistors 206-3 and 206-4 can act as current mirror and the drain currents of 206-3 and 206-4 are equal. Further, since the drain current of 206-3 is connected with the drain current of 206-1, the output current lout is, for example, the difference between the drain of 206-1 and the drain current of 206-2. That is, current Iₒᵤₜ is proportional with the difference between V₁ and V₂.

If a pressure is applied to the circuit in Figure 2, then an unbalance between the first and the second branch of the circuit occurs. For example, if positioning transistors 206-2 and 206-3 near the center of the flexible membrane and transistors 206-1 and 206-4 near the edges of membrane, then when the channel conductivity of transistor 206-2 and transistor 206-3 increases, then the channel conductivity of transistor 206-1 and transistor 206-4 may decrease, and vice versa. This is reflected in the fact that the carrier mobility in the channel of 206-3 is different from the one in the channel of 206-4 and the carrier mobility in the channel of 206-1 is different than the carrier mobility in the channel of 206-2. Also, because 206-3 and 206-4 have different channel mobilities, the two transistors have different drain currents. The difference between their drain currents is proportional to the difference between their mobilities. The larger the pressure applied to the membrane, the larger the difference between the channel mobilities of 206-3 and 206-4, the larger the difference between the drain currents of 206-3 and 206-4.

When a pressure is applied to the membrane the drain current of 206-2 is different from the drain current of 206-1. The larger the pressure applied to the membrane, the larger the difference between the channel mobilities of 206-1 and 206-2 and the larger the difference between the drain currents of 206-1 and 206-2.

Therefore, I_{OUT}, which is the difference between the drain currents of 206-2 and 206-4 it is actually given by the difference between the drain current of 206-2 and product between the drain current of 206-1 and the ratio between the channel mobility of 206-3 and 206-4. Thus, the output current will be influenced not only by the difference between V₁ and V₂, but also by the pressure applied to the membrane which is directly reflected in the difference between the channel mobilities of 206-3 and 206-4 and in the difference between the channel mobilities of 206-1 and 206-2.

The output signal at terminal 224-OUT may be further processed by amplifier stages designed for impedance matching and noise reduction. Such processing may result in more accurate measurements of pressure. The output signal lout at terminal 224-OUT can be proportional to a magnitude of the detected pressure.

Figure 3 illustrates a pressure sensor 300 with a cavity 310 in accordance with one or more embodiments of the present disclosure. As shown in Figure 3, the membrane 304 (e.g., membrane 104 previously discussed in connection with Figure 1) can, for example, be partially etched from substrate 302 (e.g., substrate 102 previously discussed in connection with Figure 1). Membrane 304 can include isolator material, such as, for example, SiO₂. Substrate 302 can, for example, be deposited of a piesoresistive semiconductive layer 301 (e.g., piesoresistive semiconductor layer 101 previously discussed in connection with Figure 1).

In some embodiments, pressure sensor 300 can include a passivation layer 303 (e.g., passivation layer 103 previously discussed in connection with Figure 1). However, embodiments are not so limited as to include a passivation layer. Passivation layer 303 can, for example, be deposited on the isolator substrate 302. The passivation layer can include isolator materials, such as, but not limited to, Si₃N₄.

In the embodiment illustrated in Figure 3, a number of transistors 306-1, 306-2, 306-3, and 306-4 (e.g., 106-1, 106-2, 106-3, and 106-4) are within the membrane 304. The transistors 306-1, 306-2, 306-3, and 306-4 may be, for example, situated in a circuit (e.g., circuit 220 discussed in connection with Figure 2) partially located on and/or within the membrane 304. For example, transistors 306-1, 306-2, 306-3, and 306-4 can be situated on a first half of the membrane 308-1 and/or a second half of the membrane 308-2 and/or proximate to a center of the membrane 307 and/or proximate to an edge of the membrane 309 and/or 311 (e.g., as described in connection with Figure 1).

As shown in Figure 3, the flexible membrane 304 can form one sidewall of the enclosed cavity. In some embodiments, the flexible membrane 304 can form a sidewall and some sides perpendicular to the sidewall of the enclosed cavity 310.

A wafer 312 can be attached to the membrane to form the other sidewall of cavity 27. The wafer 312 can, for example, include an isolator material, such as, but limited to the materials used in connection with the isolator substrate 302. The pressure sensor 300 shown in Figure 3 can, for example, measure external pressure (e.g., pressure from an impinging medium) relative to or against a reference pressure within the enclosed cavity 310.

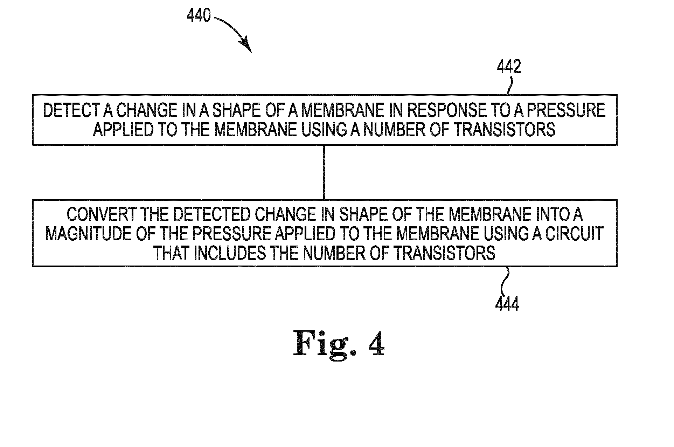

Figure 4 illustrates a method 440 for sensing pressure in accordance with one or more embodiments of the present disclosure. Method 440 can be performed, for example, by pressure sensors 100 and 300 previously described in connection with Figures 1 and 3, respectively, and/or circuit 220 previously described in connection with Figure 2.

At block 442, method 440 includes detecting a change in a shape of a membrane in response to a pressure applied to the membrane using a number of transistors. The number of transistors can include transistors such as MOSFETs, as discussed in reference to Figures 1-3, and the membrane can be the membrane discussed in reference to Figures 1-3. The pressure applied to the membrane can include, for example, a pressure resulting from an impinging medium such as ambient pressure, as previously discussed herein.

At block 444, method 440 includes converting the detected change in shape of the membrane into a magnitude of the pressure applied to the membrane using a circuit that includes the number of transistors. The circuit can be circuit 220 previously discussed in connection with Figure 2. In some embodiments, detecting a change in a shape of a membrane can include detecting an output current of the circuit. The output current can for example, represent a magnitude of the pressure applied to the membrane.

In some embodiments, the output current can include a difference in a current of a first branch of the circuit and a second branch of the circuit and/or an antagonistic effect of the first and the second branches, as discussed in reference to Figure 2.

In some embodiments, the membrane can form at least a sidewall of an enclosed cavity, wherein the enclosed cavity is at a reference pressure, as discussed in reference to Figure 3. In such embodiments, method 440 can, for example, include comparing the magnitude of the pressure applied to the membrane to the reference pressure of the enclosed cavity.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of some embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the some embodiments of the disclosure includes any other applications in which the above structures and methods are used. Therefore, the scope of some embodiments of the disclosure should be determined with reference to the appended claims, along with the full range of equivalents to which such claims are entitled.

In the foregoing Detailed Description, some features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A pressure sensor (100, 300), comprising:
a substrate (102, 302);
a membrane (104, 304) on at least a portion of the substrate (102, 302);
a number of transistors (106-1, 106-2, 106-3, 106-4; 206-1, 206-2, 206-3, 206-4; 306-1, 306-2, 306-3, 306-4) in the membrane (104, 304); and a circuit (220) including the number of transistors;
wherein:
the membrane (104, 304) is configured to change shape in response to a pressure applied to the membrane (104, 304);
a portion of the number of transistors (106-1, 106-2, 106-3, 106-4; 206-1, 206-2, 206-3, 206-4; 306-1, 306-2, 306-3, 306-4) is configured to detect the changed shape of the membrane (104, 304); and
the circuit (220) is configured to convert the detected changed shape into a magnitude of the pressure.

2. The pressure sensor (100, 300) of claim 1, wherein each of the number of transistors (106-1, 106-2, 106-3, 106-4; 206-1, 206-2, 206-3, 206-4; 306-1, 306-2, 306-3, 306-4) are metal oxide semiconductor field effect transistors.

3. The pressure sensor (100, 300) of claim 1, wherein the number of transistors (106-1, 106-2, 106-3, 106-4; 206-1, 206-2, 206-3, 206-4; 306-1, 306-2, 306-3, 306-4) include at least two p-type transistors.

4. The pressure sensor (100, 300) of claim 1, wherein the number of transistors (106-1, 106-2, 106-3, 106-4; 206-1, 206-2, 206-3, 206-4; 306-1, 306-2, 306-3, 306-4) includes:
a first transistor (106-1, 206-1, 306-1) having a gate (228-1) coupled to a first voltage terminal;
a second transistor (106-2, 206-2, 306-2) having a gate (228-2) coupled to a second voltage terminal;
a third transistor (106-3, 206-3, 306-3) having a source coupled to a third voltage terminal; and
a fourth transistor (106-4, 206-4, 306-4) having a source coupled to the third voltage terminal;
wherein:
a source of the first transistor (106-1, 206-1, 306-1) is coupled (226-B) to a source of the second transistor (106-2, 206-2, 306-2);
a drain and a gate (228-3) of the third transistor (106-3, 206-3, 306-3) are coupled (226-3/1) to a drain of the first transistor;
a gate (228-4) of the fourth transistor is coupled (226-3/4) to the gate (228-3) of the third transistor; and
a drain of the fourth transistor (106-4, 206-4, 306-4) is coupled (226-4/2) to a drain of the second transistor (106-2, 206-2, 306-2).

5. The pressure sensor (100, 300) of claim 4, wherein the pressure sensor (100, 300) includes a fifth transistor (1 06-B, 206-B, 306-B) having a drain coupled (226-B) to the sources of the first (106-1, 206-1, 306-1) and second (106-2, 206-2, 306-2) transistors, wherein:
the third voltage terminal is coupled to the fourth voltage terminal;
a gate (228-B) of the fifth transistor (1 06-B, 206-B, 306-B) is coupled to a fifth voltage terminal; and
a source of the fifth transistor (1 06-B, 206-B, 306-B) is coupled to ground (230).

6. The pressure sensor (100, 300) of claim 4, wherein:
the second transistor (106-2, 206-2, 306-2) is on a first half of the membrane (108-1, 308-1) proximate to a center of the membrane (107, 307);
the third transistor (106-3, 206-3, 306-3) is on a second half of the membrane (108-2, 308-2) proximate to the center of the membrane (107, 307);
the first transistor (106-1, 206-1, 306-1) is on the first half of the membrane (108-1, 308-1) proximate to a first edge of the membrane (109, 309); and
the fourth transistor (106-4, 206-4, 306-4) is on the second half of the membrane (108-2, 308-2) proximate to a second edge of the membrane (111,311).

7. The pressure sensor (100, 300) of claim 6, wherein the circuit (220) includes:
a first branch comprising the second transistor (106-2, 206-2, 306-2) coupled to the fourth transistor (106-4, 206-4, 306-4); and
a second branch comprising the third transistor (106-3, 206-3, 306-3) coupled to the first transistor (106-1, 206-1, 306-1).

8. The pressure sensor (100, 300) of claim 4, wherein at least one of the first, second, third and fourth transistors (106-1, 106-2, 106-3, 106-4; 206-1, 206-2, 206-3, 206-4; 306-1, 306-2, 306-3, 306-4) is configured to detect the change in shape of the membrane (104, 304) based on a change in conductance of a channel of the at least one transistor (106-1, 106-2, 106-3, 106-4; 206-1, 206-2, 206-3, 206-4; 306-1, 306-2, 306-3, 306-4) in response to the changed shape of the membrane (104, 304).

9. The pressure sensor (100, 300) of claim 1, wherein the membrane is a silicon-on-insulator membrane (104, 304).

10. The pressure sensor (100, 300) of claim 7, wherein the circuit includes an electrical output comprising a difference in a current of the first branch and a current of the second branch and an antagonistic effect of the first and the second branches.
